Europäisches Patentamt

European Patent Office

Office européen des brevets

(11) Veröffentlichungsnummer: **0 180 795**
**B1**

(12) # EUROPÄISCHE PATENTSCHRIFT

(45) Veröffentlichungstag der Patentschrift:
**12.08.87**

(21) Anmeldenummer: **85112774.6**

(22) Anmeldetag: **09.10.85**

(51) Int. Cl.⁴: **C 08 K 3/32,** C 08 K 9/10, C 08 L 75/04, C 08 J 9/00, C 09 K 21/04

(54) Verfahren zur Herstellung von hydrolysestabilen, feinteiligen Flammschutzmitteln auf der Basis von Ammoniumpolyphosphat.

(30) Priorität: 26.10.84 DE 3439233
04.09.85 DE 3531500

(43) Veröffentlichungstag der Anmeldung:
14.05.86 Patentblatt 86/20

(45) Bekanntmachung des Hinweises auf die Patenterteilung:
12.08.87 Patentblatt 87/33

(84) Benannte Vertragsstaaten:
DE FR GB IT NL SE

(56) Entgegenhaltungen:
EP-A-0 033 361
DE-A-3 316 880

(73) Patentinhaber: HOECHST AKTIENGESELLSCHAFT,
Postfach 80 03 20, D-6230 Frankfurt am Main 80
(DE)

(72) Erfinder: Pieper, Werner, Dr., Am Käferbruch 14,
D-5014 Kerpen (DE)
Erfinder: Staendeke, Horst, Dr., Alte Honrather
Strasse 22, D-5204 Lohmar (DE)
Erfinder: Elsner, Georg, Dr., Dr. Krauss- Strasse 5,
D-5030 Hürth (DE)

## Beschreibung

Die Erfindung betrifft ein Verfahren zur Herstellung von hydrolysestabilen, feinteiligen Flammschutzmitteln auf der Basis von Ammoniumpolyphosphat durch Mikroverkapselung von pulverförmigem Ammoniumpolyphosphat mit einem härtbaren, im gehärteten Zustand wasserunlöslichen Kunstharz.

Aus der DE-OS 29 49 537 (entspricht EP-A- 0 033 361) ist ein teilchenförmiges Mittel auf der Basis von freifließenden, pulverförmigen Ammoniumpolyphosphaten der allgemeinen Formel

$$H_{(n-m)+2}(NH_4)_mP_nO_{3n+1}$$

in welcher n eine ganze Zahl mit einem Durchschnittswert von etwa 20 bis 800 bedeutet und das Verhältnis von m zu n etwa 1 beträgt, zur Verhinderung der Brennbarkeit von brennbaren Stoffen bekannt, welches dadurch gekennzeichnet ist, daß es aus

a) etwa 75 bis 99 Gew.% Ammoniumpolyphosphat und

b) etwa 1 bis 25 Gew.% eines gehärteten, wasserunlöslichen Polykondensationsproduktes aus Melamin und Formaldehyd, welches die einzelnen Ammoniumpolyphosphatteilchen umhüllt, besteht.

Das Aufbringen des Melamin/Formaldehyd-Harzes auf die Ammoniumpolyphosphat-Teilchen erfolgt hierbei beispielsweise derart, daß man zunächst das Ammoniumpolyphosphat in Methanol suspendiert, die Suspension bis zu einem schwachen Rückfluß des Methanols erhitzt und anschließend in die Suspension eine methanolisch/wäßrige Lösung des Melamin/Formaldehyd-Harzes eintropft. Nach Ablauf einer Nachreaktionszeit von beispielsweise 0,5 bis 2 Stunden wird die Suspension filtriert und der Filterrückstand im Stickstoffstrom bei 100°C während 150 bis 180 Minuten getrocknet. Während der Trocknung erfolgt gleichzeitig die Aushärtung des auf die Ammoniumpolyphosphat-Teilchen aufgebrachten Harzüberzuges.

Weiter ist in der DE-OS 33 16 880 (entspricht EP-A- 0 131 097 (Art 54 (3) Dokument) ein Verfahren zur Mikroverkapselung von pulverförmigen Ammoniumpolyphosphaten vorgeschlagen worden, das sich dadurch auszeichnet, daß man das Ammoniumpolyphosphat, einen aliphatischen Alkohol mit 1 - 4 C-Atomen als Verdünnungsmittel sowie ein Melamin/Formaldehyd-Harz, gegebenenfalls in einem Lösungsmittel gelöst, in beliebiger Reihenfolge in einem Druckgefäß vorlegt und bei Raumtemperatur innig vermischt, das Gemisch auf eine Temperatur von etwa 80°C bis etwa 180°C erhitzt und zur Aushärtung der Harzkomponente bei dieser Temperatur und dem dem Dampfdruck des Verdünnungsmittels entsprechenden Druck während 15 bis 240 Minuten beläßt, das Gemisch auf Raumtemperatur abkühlt, das Verdünnungsmittel abtrennt und das erhaltene Produkt trocknet.

Durch die Mikroverkapselung der Ammoniumpolyphosphat-Teilchen mit gehärtetem, wasserunlöslichem Kunstharz wird eine erheblich herabgesetzte Löslichkeit und vergrößerte Hydrolysebeständigkeit des Ammoniumpolyphosphats erzielt. Dies wirkt sich günstig beim Einsatz dieses Mittels als Flammschutzmittel aus, da durch Witterungseinflüsse oder Reinigungsvorgänge die wasserlöslichen Anteile bei fehlender Mikroverkapselung ausgewaschen werden können und somit ein Teil des Flammschutzeffektes verloren geht.

Den bisherigen Verfahren zur Mikroverkapselung von Ammoniumpolyphosphaten mit Melamin/Formaldehyd-Harz haftet der Nachteil an, daß es auf den Innenwänden des Reaktors zu Anbackungen von Ammoniumpolyphosphat und von gehärtetem Harz kommt, wodurch ein schlechter Wärmedurchgang resultiert.

Außerdem kommt es bei den oben genannten Verfahren durch Agglomeratbildung zu einer Vergrößerung des mittleren Korndurchmessers gegenüber dem ursprünglich eingesetzten Ammoniumpolyphosphat. Diese Agglomeratbildung und insbesondere die von den Reaktorwänden entfernten Anbackungen machen einen Mahlvorgang nötig, wenn das mikroverkapselte Ammoniumpolyphosphat als Flammschutzmittel eingesetzt werden soll. Durch den Mahlvorgang entstehen Bruchflächen, an denen das Ammoniumpolyphosphat dem Hydrolyseangriff ausgesetzt ist und zu löslichen, kurzkettigen Ammoniumpolyphosphaten abgebaut wird.

Außerdem hat sich gezeigt, daß das nach dem Verfahren der DE-OS 33 16 880 durch Mikroverkapselung mit Melamin/Formaldehyd-Harzen hergestellte Flammschutzmittel einen erheblichen Gehalt an freiem Formaldehyd aufweist.

Es war somit die Aufgabe gestellt, ein Verfahren zur Mikroverkapselung von Ammoniumpolyphosphat zu entwickeln, bei dem

1. der Prozeß der Mikroverkapselung praktisch nicht zu einer Kornvergröberung des eingesetzten Ammoniumpolyphosphats führt,

2. die Hydrolysestabilität des mikroverkapselten Ammoniumpolyphosphats auch bei höheren Temperaturen sehr gut ist,

3. der Gehalt des mikroverkapselten Ammoniumpolyphosphats an freiem Formaldehyd sehr gering ist sowie

4. an den Reaktorwandungen und den Rühraggregaten keine Anbackungen entstehen.

Überraschenderweise wurde nunmehr gefunden, daß bei der Mikroverkapselung das langkettige Ammoniumpolyphosphat nicht hydrolysiert wird, wenn ein Wasser-Suspensionsmittel-Gemisch mit einem Wasseranteil von mindestens 40 Masse% angewandt wird.

Ferner kommt es dabei weder zu einer Agglomeratbildung und damit zu einer Kornvergröberung des Ammoniumpolyphosphates noch zu Anbackungen an den Reaktorwandungen oder Rührerflügeln. Schließlich konnte der Gehalt an freiem Formaldehyd deutlich gesenkt werden.

Gegenstand der Erfindung ist nunmehr ein Verfahren zur Herstellung von hydrolysestabilen, feinteiligen Flammschutzmitteln auf der Basis von freifließendem, pulverförmigem Ammoniumpolyphosphat der allgemeinen Formel

2

$$H_{(n-m)+2}(NH_4)_m P_n O_{3n+1}$$

in welcher n eine ganze Zahl mit einem Durchschnittswert von etwa 20 bis 800 bedeutet und das Verhältnis von m zu n etwa 1 beträgt, durch Behandlung des Ammoniumpolyphosphates in Gegenwart eines organischen Suspensionsmittels und unter Rühren mit einem wärmehärtbaren und in gehärtetem Zustand wasserunlöslichen Kunstharz, sowie Abtrennen und Trocknen des behandelten Ammoniumpolyphosphates, welches dadurch gekennzeichnet ist, daß man bei Raumtemperatur aus dem Ammoniumpolyphosphat, aus Wasser und dem organischen Suspensionsmittel, wobei in dem Wasser-Suspensionsmittel-Gemisch ein Wasseranteil von mindestens 40 Masse% vorliegt, sowie aus einem Melamin/Formaldehyd-Harz und gegebenenfalls einem Härter eine Suspension herstellt, dieses Gemisch unter Rühren auf 50 bis 180°C unter Normaldruck oder unter Überdruck in einem Druckgefäß erhitzt und zur Aushärtung der Harzkomponente die Suspension 15 bis 240 Minuten bei dieser Temperatur beläßt.

Als Überzugsmittel kann vorzugsweise ein Melamin/Formaldehyd-Harz eingesetzt werden, das im ungehärteten Zustand ein Pulver darstellt, dessen 50 masse%ige wäßrige Lösung eine dynamische Viskosität von 20 bis 50 mPa.s, einen pH-Wert (bei 20°C) von 8,8 bis 10,0 und eine Dichte (bei 20°C) von 1,21 bis 1,23g/ml besitzt.

Als geeignete organische Suspensionsmittel können aliphatische Alkohole mit 1 bis 4 C-Atomen oder Ketone mit 3 bis 6 C-Atomen eingesetzt werden.

Ein weiteres Merkmal der vorliegenden Erfindung ist auch, daß zur Herstellung der Suspension ein Masseverhältnis von Wasser : organischem Suspensionsmittel wie 100 : 1 bis 150, insbesondere von 100 : 10 bis 100, eingehalten wird. Schließlich erfolgt eine besonders gute Mikroverkapselung des Ammoniumpolyphosphates dann, wenn in der Suspension ein Masseverhältnis von Ammoniumpolyphosphat: Wasser-Suspensionsmittel-Gemisch : Harzkomponente : Härter von 1 : 0,5 bis 5 : 0,05 bis 0,5 : 0,0025 bis 0,1, insbesondere von 1 : 1 bis 3 : 0,05 bis 0,15 : 0,01, eingehalten wird. Auch hat es sich als vorteilhaft erwiesen, wenn die Reaktionszeit 0,5 bis 3 Stunden beträgt.

Geeignete langkettige Ammoniumpolyphosphate sind Ammoniumpolyphosphate mit einer mittleren Teilchengröße von 0,01 bis 0,05 mm. Als Flammschutzmittel hat sich besonders das mikroverkapselte Ammoniumpolyphosphat mit einer mittleren Teilchengröße von 0,01 bis 0,1 mm, vorzugsweise von 0,03 - 0,06 mm, bewährt. Vorzugsweise liegt der Anteil des Melamin/Formaldehyd-Harzes im Flammschutzmittel bei 2 bis etwa 15 Masse%, insbesondere bei etwa 10 Masse%.

Gemäß einem weiteren Gedanken der vorliegenden Erfindung kann die Beschichtung bzw. Mikroverkapselung des Ammoniumpolyphosphates durch Behandlung mit dem Melamin/Formaldehyd-Harz und gegebenenfalls einem Härter auch in mehreren, beispielsweise zwei bis drei aufeinanderfolgenden Schritten erfolgen, wobei das Reaktionsgemisch zwischen den einzelnen Schritten vor der Zugabe von weiterem Melamin/Formaldehyd-Harz und gegebenenfalls einem Härter abgekühlt wird, beispielsweise von einer Reaktionstemperatur bei 80°C bis auf 60°C oder darunter.

Die erfindungsgemäß hergestellten feinteiligen mikroverkapselten Ammoniumpolyphosphate sind besonders geeignet zur flammwidrigen Einstellung von Polyurethanen und Polyurethanschäumen, wobei der Gehalt des Mittels im Polyurethanschaum etwa 5 bis 25 Masse%, bezogen auf die Menge der Polyolkomponente des Polyurethans, beträgt.

Das erfindungsgemäße Verfahren wird in den nachfolgenden Beispielen erläutert. Zur Durchführung der in den Beispielen dargelegten Versuche wurden im Handel erhältliche Ammoniumpolyphosphate sowie verschiedene, ebenfalls handelsübliche Melamin/Formaldehyd-Harze und Härter eingesetzt. Im einzelnen handelt es sich hierbei um folgende Produkte:

1. ® Exolit 422, Hoechst Aktiengesellschaft, Frankfurt/Main.

Es handelt sich um ein feinkörniges, in Wasser schwerlösliches Ammoniumpolyphosphat, $(NH_4PO_3)_n$, wobei der Kondensationsgrad n ~ 700 ist.

2. ® Kauramin-Tränkharz 700 Pulver, BASF Aktiengesellschaft, Ludwigshafen/Rhein.

Es handelt sich um ein Melamin/Formaldehyd-Kondensationsharz, das ein weißes Pulver darstellt und dessen 50 masse%ige wäßrige Lösung eine dynamische Viskosität von 20 - 50 mPa.s, einen pH-Wert von 8,8 - 9,0 und eine Dichte (bei 20°C) von 1,22 g/ml besitzt.

3. ® Madurit MW 909, Hoechst Aktiengesellschaft, Frankfurt/Main.

Es handelt sich um ein nicht plastifiziertes Melamin/ Formaldehyd-Harz, das als weißes Pulver angeboten wird. Seine 50 masse%ige wäßrige Lösung hat eine dynamische Viskosität von etwa 30 mPa.s, einen pH-Wert von 9,0 -10,0 und eine Dichte (bei 20°C) von 1,21 -1,225 g/ml.

4. Härter 527 flüssig, BASF Aktiengesellschaft, Ludwigshafen/Rhein.

Es handelt sich um eine klare, gelbliche Flüssigkeit, die eine Viskosität (bei 20°C) von etwa 17 mPa.s, einen pH-Wert von 4,5 - 6,0 und eine Dichte (bei 20°C) von etwa 1,2 g/ml besitzt.

5. ® Madurit-Härter VMH 3843, Hoechst Aktiengesellschaft, Frankfurt/Main.

Es handelt sich um eine klare, farblose, niedrigviskose Flüssigkeit, die einen pH-Wert von 6,2 - 7,0 und eine Dichte (bei 20°C) von 1,16 - 1,17 g/ml besitzt.

**Beispiel 1**

In einem beheizbaren emaillierten Druckreaktor (Inhalt: 16 l) mit Rührer, Temperatur- und Druckmeßgeräten wurden 5,6 l Wasser und 3 l Methanol vorgelegt; unter Rühren wurde bei Raumtemperatur ein Gemisch von 5,2 kg ® Exolit 422 und 500 g ® Kauramin-Tränkharz-700-Pulver zugegeben. Die Suspension wurde auf 120° C erhitzt, wobei sich ein Druck von 4 bar einstellte. Nach 20 Minuten Reaktionszeit wurde die Suspension abgekühlt und filtriert. Der Filterkuchen wurde mit 1 l Methanol gewaschen und bei 100° C im Stickstoffstrom getrocknet.

Es wurden 5,5 kg beschichtetes Ammoniumpolyphosphat mit einem Melamin/Formaldehyd-Harzanteil von 8,4 Masse% erhalten. Das Filtrat enthielt 2,1 Masse% Feststoff und 72 Masse% Wasser.

Zur Bestimmung der wasserlöslichen Anteile wurden 10 g des hergestellten Produktes in 100 ml Wasser suspendiert und die Suspension 20 min bei 25° C bzw. bei 60° C gerührt. Anschließend wurde der im Wasser ungelöste Anteil des Produktes innerhalb von 40 Minuten durch Zentrifugieren sedimentiert. Von der überstehenden klaren Lösung wurden 5,0 ml in eine zuvor gewogene Aluminiumschale pipettiert und bei 120° C im Trockenschrank eingedampft. Aus der Menge des Verdampfungsrückstandes wurde der wasserlösliche Anteil berechnet. Die ermittelten Werte für die wasserlöslichen Anteile und die anderen Produktdaten sind in den Tabellen 1 und 2 aufgeführt.

Für die Bestimmung der anderen Produktdaten wurden folgende Methoden angewandt:

pH-Wert

Die Bestimmung des pH-Wertes erfolgte mit Hilfe eines Labor-pH-Meters (Fa. Knick, Berlin Typ Digital-pH-Meter 646) in einer 1 masse%igen wäßrigen Suspension.

Säurezahl

Zur Bestimmung der Säurezahl wurden 10 g Produkt in 150 ml Wasser suspendiert, bis zur Einstellung eines konstanten pH-Wertes gerührt und mit 0,1 n KOH unter Verwendung eines Labor-pH-Meters (siehe oben) bis pH = 7,0 titriert.

Siebanalyse

Die Siebanalysen wurden mit einer Einwaage von 10 g Produkt mit einem Labor-Luftstrahlsieb (Fa. Alpine, Augsburg, Typ A 200-LS, Siebdurchmesser 200 mm) durchgeführt.

**Beispiel 2**

In einem 1 l-Dreihalskolben mit Rückflußkühler, Rührer und Thermometer wurden 195 g ® Exolit 422 und 18,8 g ® Kauramin-Tränkharz-700-Pulver in einem Gemisch aus 240 ml Wasser und 75 ml Methanol suspendiert und unter Rühren zum Rückfluß des Methanols erhitzt. Nach einer Reaktionszeit von 1 Stunde bei 83° C wurde die Suspension abgekühlt und filtriert; der Filterkuchen wurde mit Methanol gewaschen und bei 100° C im Stickstoffstrom getrocknet.

Es wurden 205 g beschichtetes Ammoniumpolyphosphat mit einem Melamin/Formaldehyd-Harzanteil von 8,3 Masse% erhalten; das Filtrat enthielt 1,9 Masse% Feststoff und 82 Masse% Wasser. Die ermittelten Werte für die wasserlöslichen Anteile und die anderen Produktdaten sind in den Tabellen 1 und 2 aufgeführt.

**Beispiel 3**

Es wurde analog Beispiel 2 verfahren, wobei jedoch als Suspensionsmittel ein Gemisch von 180 ml Wasser und 150 ml Aceton eingesetzt wurde. Nach einer Reaktionszeit von 1 Stunde bei 67° C wurde die Suspension abgekühlt und filtriert; der Filterkuchen wurde mit Aceton gewaschen und bei 100° C im Stickstoffstrom getrocknet.

Es wurden 200 g beschichtetes Ammoniumpolyphosphat mit einem Harzanteil von 8,5 Masse% erhalten; das Filtrat enthielt 1,6 Masse% Feststoff und 65 Masse% Wasser. Die ermittelten Werte für die wasserlöslichen Anteile und die anderen Produktdaten sind in den Tabellen 1 und 2 aufgeführt.

**Beispiel 4**

Es wurde analog Beispiel 2 verfahren, wobei jedoch als Suspensionsmittel ein Gemisch von 200 ml Wasser und 100 ml Isopropanol eingesetzt wurde. Nach einer Reaktionszeit von 1 Stunde bei 85° C wurde die Suspension abgekühlt und filtriert; der Filterkuchen wurde mit Isopropanol gewaschen und bei 100° C im Stickstoffstrom getrocknet.

Es wurden 208 g beschichtetes Ammoniumpolyphosphat mit einem Harzanteil von 8,6 Masse% erhalten; das Filtrat enthielt 1,1 Masse% Feststoff und 74 Masse% Wasser. Die ermittelten Werte für die wasserlöslichen Anteile und die anderen Produktdaten sind in den Tabellen 1 und 2 aufgeführt.

**Beispiel 5**

In einen beheizbaren emaillierten Druckreaktor (Inhalt: 16 l) wurden 2,22 kg Wasser, 0,44 kg (=550 ml) Methanol, 2,0 kg ® Exolit 422 und 0,20 kg ® Kauramin-Tränkharz-700-Pulver eingetragen. Unter Rühren wurde die Suspension auf 100°C erwärmt und 1 Stunde auf dieser Temperatur gehalten. Nach der Abkühlung auf Raumtemperatur wurde die Suspension filtriert; der Filterkuchen wurde mit Methanol gewaschen und anschließend bei 100°C im Stickstoffstrom getrocknet.

Es wurden 2086 g beschichtetes Ammoniumpolyphosphat mit einem Harzanteil von 9,3 Masse% erhalten. Die ermittelten Werte für die wasserlöslichen Anteile und die anderen Produktdaten sind in den Tabellen 3 und 4 aufgeführt.

**Beispiel 6**

Es wurde analog Beispiel 5 gearbeitet, wobei jedoch als Suspensionsmittel ein Gemisch von 3,20 kg Wasser und 0,64 kg (= 800 ml) Methanol eingesetzt wurde.

Es wurden 2060 g beschichtetes Ammoniumpolyphosphat mit einem Harzanteil von 9,4 Masse% erhalten. Die ermittelten Werte für die wasserlöslichen Anteile und die anderen Produktdaten sind in den Tabellen 3 und 4 aufgeführt.

**Beispiel 7**

Es wurde analog Beispiel 6 gearbeitet, wobei jedoch eine Reaktionstemperatur von 80°C eingehalten wurde.

Es wurden 2055 g beschichtetes Ammoniumpolyphosphat mit einem Harzanteil von 9,2 Masse% erhalten. Die ermittelten Werte für die wasserlöslichen Anteile und die anderen Produktdaten sind in den Tabellen 3 und 4 aufgeführt.

**Beispiel 8**

Es wurde analog Beispiel 6 gearbeitet, wobei jedoch eine Reaktionstemperatur von 60°C eingehalten wurde.

Es wurden 2070 g beschichtetes Ammoniumpolyphosphat mit einem Harzanteil von 9,3 Masse% erhalten. Die ermittelten Werte für die wasserlöslichen Anteile und die anderen Produktdaten sind in den Tabellen 3 und 4 aufgeführt.

**Beispiel 9**

Es wurde analog Beispiel 7 gearbeitet. Dabei wurden 2080 g beschichtetes Ammoniumpolyphosphat mit einem Harzanteil von 9,3 Masse% erhalten. Die dabei ermittelten Werte für die wasserlöslichen Anteile, die anderen Produktdaten und den Gehalt an "freiem Formaldehyd" sind in den Tabellen 5, 6 und 7 aufgeführt.

**Beispiel 10**

Es wurde analog Beispiel 7 gearbeitet, wobei jedoch zusätzlich 20 g Härter 527 flüssig (BASF Aktiengesellschaft, Ludwigshafen/Rhein) eingesetzt wurden.

Dabei wurden 2075 g beschichtetes Ammoniumpolyphosphat mit einem Harzanteil von 9,5 Masse% erhalten. Die ermittelten Werte für die wasserlöslichen Anteile, die anderen Produktdaten und den Gehalt an "freiem Formaldehyd" sind in den Tabellen 5, 6 und 7 aufgeführt.

**Beispiel 11**

Es wurde analog Beispiel 7 gearbeitet, wobei jedoch 0,20 kg ® Madurit MW 909 (Hoechst Aktiengesellschaft, Frankfurt/Main) eingesetzt wurden.

Dabei wurden 2085 g beschichtetes Ammoniumpolyphosphat mit einem Harzanteil von 9,4 Masse% erhalten. Die ermittelten Werte für die wasserlöslichen Anteile, die anderen Produktdaten und den Gehalt an "freiem Formaldehyd" sind in den Tabellen 5, 6 und 7 aufgeführt.

## Beispiel 12

Es wurde analog Beispiel 7 gearbeitet, wobei jedoch 0,20 kg ® Madurit MW 909 und 20 g ® Madurit-Härter VMH 3843 (Hoechst Aktiengesellschaft, Frankfurt/Main) eingesetzt wurden.

Dabei wurden 2095 g beschichtetes Ammoniumpolyphosphat mit einem Harzanteil von 9,5 Masse% erhalten. Die ermittelten Werte für die wasserlöslichen Anteile, die anderen Produktdaten und den Gehalt an "freiem Formaldehyd" sind in den Tabellen 5, 6 und 7 aufgeführt.

## Beispiel 13

Es wurde analog Beispiel 7 gearbeitet, wobei jedoch 160 g ® Madurit MW 909 und 8 g ® Madurit-Härter VMH 3843 eingesetzt wurden.

Dabei wurden 2100 g beschichtetes Ammoniumpolyphosphat mit einem Harzanteil von 7,4 Masse% erhalten. Die ermittelten Werte für die wasserlöslichen Anteile sind in Tabelle 8 aufgeführt.

## Beispiel 14

Es wurde analog Beispiel 7 earbeitet, wobei jedoch 280 g ® Madurit MW 909 und 14 g ® Madurit-Härter VMH 3843 eingesetzt wurden.

Dabei wurden 2140 g beschichtetes Ammoniumpolyphosphat mit einem Harzanteil von 11,8 Masse% erhalten. Die ermittelten Werte für die wasserlöslichen Anteile sind in der Tabelle 8 aufgeführt.

## Beispiel 15

Es wurde analog Beispiel 12 gearbeitet, wobei jedoch folgende Änderungen durchgeführt wurden: Zunächst wurden zum Suspensionsmittel (Wasser/Methanol) und Ammoniumpolyphosphat nur 100 g ® Madurit MW 909 und 10 g ® Madurit-Härter VMH 3843 zugesetzt. Nach einer Reaktionszeit von 1 Stunde bei 80°C wurde der Reaktorinhalt auf 60°C abgekühlt; in den drucklosen Reaktor wurden dann nochmals 100 g ® Madurit MW 909 und 10 g ® Madurit-Härter VMH 3843 eingefüllt. Anschließend wurde der Druckreaktor wiederum auf 80°C erwärmt und 1 Stunde auf 80°C gehalten.

Es wurden 2090 g beschichtetes Ammoniumpolyphosphat mit einem Harzanteil von 9,5 Masse% erhalten. Die ermittelten Werte für die wasserlöslichen Anteile sind in der Tabelle 8 aufgeführt.

## Beispiel 16

Es wurde analog Beispiel 15 gearbeitet, wobei jedoch bei der 2. Harzzugabe (nach 1 Stunde Reaktionszeit bei 80°C) auf die Zugabe des ® Madurit-Härters VMH 3843 verzichtet wurde.

Es wurden 2085 g beschichtetes Ammoniumpolyphosphat mit einem Harzanteil von 9,4 Masse% erhalten. Die ermittelten Werte für die wasserlöslichen Anteile sind in der Tabelle 8 aufgeführt.

## Beispiel 17

Es wurde analog Beispiel 16 gearbeitet, wobei jedoch die Harzmenge in 3 Schritten zugesetzt wurde. Bei der Zugabe des zweiten und dritten Drittels der Harzmenge (nach jeweils 1 Stunde Reaktionszeit bei 80°C) wurde auf die Zugabe des ® Madurit-Härters VMH 3843 verzichtet.

Es wurden 2090 g beschichtetes Ammoniumpolyphosphat mit einem Harzanteil von 9,6 Masse% erhalten. Die ermittelten Werte für die wasserlöslichen Anteile sind in der Tabelle 8 aufgeführt.

Tabelle 1

| Produkt | Gehalt an Melamin/ Formaldehyd-Harz (%) | Wasserlösliche Anteile (%) | | | |
|---|---|---|---|---|---|
| | | bei 25°C | Veränderung (%) | bei 60°C | Veränderung (%) |
| Beispiel 1 | 8,4 | 0,2 | -98 | 0,8 | -98 |
| Beispiel 2 | 8,3 | 0,2 | -98 | 0,5 | -99 |
| Beispiel 3 | 8,5 | 0,2 | -98 | 0,4 | -99 |
| Beispiel 4 | 8,6 | 0,2 | -98 | 0,4 | -99 |
| ® Exolit 422 1) | - | 8,2 | - | 62 | - |

1) Zum Vergleich wurden die Werte der für diese Versuche eingesetzten unbeschichteten Handelsware (®Exolit 422, Hoechst Aktiengesellschaft, Frankfurt/Main) aufgeführt.

**Tabelle 2**

| Produkt | Gehalt an Melamin/Formaldehyd-Harz (%) | pH-Wert | Säurezahl (mg KOH/g) | Siebanalyse (%) | | |
|---|---|---|---|---|---|---|
| | | | | < 75 μm | < 45 μm | < 25 μm |
| Beispiel 1 | 8,4 | 5,9 | 0,2 | > 99 | > 99 | 42 |
| Beispiel 2 | 8,3 | 5,6 | 0,1 | > 99 | > 99 | 65 |
| Beispiel 3 | 8,5 | 5,9 | 0,3 | > 99 | 97 | 35 |
| Beispiel 4 | 8,6 | 4,8 | 0,7 | > 99 | 99 | 76 |
| ® Exolit 422 1) | - | 5,6 | 0,5 | > 99 | > 99 | 84 |

8

1) Zum Vergleich wurden die Werte der für diese Versuche eingesetzten unbeschichteten Handelsware (®Exolit 422, Hoechst Aktiengesellschaft, Frankfurt/Main) aufgeführt.

**Tabelle 3**

| Produkt | Gehalt an Melamin/Formaldehyd-Harz (%) | Suspensionsstoffdichte (%) 1) | Reaktionstemperatur (°C) | Wasserlösliche Anteile (%) | | | |
|---|---|---|---|---|---|---|---|
| | | | | bei 25°C | Veränderung (%) | bei 60°C | Veränderung (%) |
| Beispiel 5 | 9,3 | 72 | 100 | 0,3 | -96 | 0,7 | -99 |
| Beispiel 6 | 9,4 | 50 | 100 | 1,0 | -86 | 1,3 | -98 |
| Beispiel 7 | 9,2 | 50 | 80 | 0,2 | -97 | 0,8 | -99 |
| Beispiel 8 | 9,3 | 50 | 60 | 0,4 | -95 | 1,6 | -97 |
| ®Exolit 422 2) | - | - | - | 7,4 | - | 61 | - |

1) Die Suspensionsstoffdichte wird angegeben als Verhältnis von Gewichtsteilen Ammoniumpolyphosphat zu Volumenteilen Suspensionsmittel

2) Zum Vergleich wurden die Werte der für diese Versuche eingesetzten unbeschichteten Handelsware (®Exolit 422, Hoechst Aktiengesellschaft, Frankfurt/Main) aufgeführt.

**Tabelle 4**

| Produkt | pH-Wert | Säurezahl (mg KOH/g) | Rieselfähigkeit 1) (cot $\varphi$) | Siebanalyse (%) | | |
|---|---|---|---|---|---|---|
| | | | | < 75 µm | < 45 µm | < 25 µm |
| Beispiel 5 | 4,7 | 0,3 | 1,47 | > 99 | 99 | 73 |
| Beispiel 6 | 4,8 | 0,8 | 1,47 | > 99 | 98 | 70 |
| Beispiel 7 | 5,3 | 0,3 | 1,67 | > 99 | 99 | 75 |
| Beispiel 8 | 5,9 | 0,4 | 1,61 | 99 | 97 | 77 |
| ® Exolit 422 2) | 6,0 | 0,3 | < 0,7 | > 99 | > 99 | 81 |

1) Rieselfähigkeit nach PFRENGLE (DIN 53916): Meßwert ist der Cotangens des Schüttwinkels γ

2) Zum Vergleich wurden die Werte der für diese Versuche eingesetzten unbeschichteten Handelsware (®Exolit 422, Hoechst Aktiengesellschaft, Frankfurt/Main) aufgeführt.

**Tabelle 5**

| Produkt | Melamin/Formaldehyd-Harztyp und Gehalt | Härter-Typ/Härter-Konzentration (%) [1] | Wasserlösliche Anteile (%) | | | |
|---|---|---|---|---|---|---|
| | | | bei 25°C | Veränderung (%) | bei 60°C | Veränderung (%) |
| Beispiel 9 | ® Kauramin-Tränkharz 700 Pulver 9,3 % | – | 0,3 | -96 | 0,6 | -99 |
| Beispiel 10 | ® Kauramin-Tränkharz 700 9,5 % | Härter 527 flüssig 10 % | 0,2 | -97 | 0,5 | -99 |
| Beispiel 11 | ® Madurit MW 909 9,4 % | – | 0,1 | -99 | 0,4 | -99 |
| Beispiel 12 | ® Madurit MW 909 9,5 % | ® Madurit-Härter VMH 3843 10 % | 0,1 | -99 | 0,3 | -99 |
| ® Exolit 422 [2] | – | – | 7,4 | – | 61 | – |

1) Diese Angaben beziehen sich auf das Verhältnis vom Härter zur Menge an Melamin/Formaldehyd-Harz.

2) Zum Vergleich wurden die Werte der für diese Versuche eingesetzten unbeschichteten Handelsware (®Exolit 422, Hoechst Aktiengesellschaft, Frankfurt/Main) aufgeführt.

**Tabelle 6**

| Produkt | pH-Wert | Säurezahl (mg KOH/g) | Rieselfähigkeit 1) (Cot γ) | Siebanalyse (%) | | |
|---|---|---|---|---|---|---|
| | | | | < 75 μm | < 45 μm | < 25 μm |
| Beispiel 9 | 5,8 | 0,3 | 1,20 | > 99 | 98 | 70 |
| Beispiel 10 | 5,9 | 0,2 | 1,34 | > 99 | 99 | 74 |
| Beispiel 11 | 6,0 | 0,1 | 1,62 | > 99 | 99 | 75 |
| Beispiel 12 | 6,3 | < 0,1 | 1,74 | > 99 | > 99 | 79 |
| ® Exolit 422 2) | 6,0 | 0,3 | < 0,7 | > 99 | > 99 | 81 |

1) Rieselfähigkeit nach PFRENGLE (DIN 53916): Meßwert ist der Cotangens des Schüttwinkels γ
2) Zum Vergleich wurden die Werte der für diese Versuche eingesetzten unbeschichteten Handelsware (®Exolit 422, Hoechst Aktiengesellschaft, Frankfurt/Main) aufgeführt.

**Tabelle 7**

| Produkt | Gehalt an Melamin/Formaldehyd-Harz (%) | Gehalt an "freiem" Formaldehyd 1) (mg $CH_2O$/100 g Probe) | Veränderung (%) |
|---|---|---|---|
| Beispiel 9 | 9,3 | 7,4 | -83 |
| Beispiel 10 | 9,5 | 8,2 | -81 |
| Beispiel 11 | 9,4 | 5,1 | -88 |
| Beispiel 12 | 9,5 | 3,9 | -91 |
| ® Exolit 456 2) | 9,5 | 43,9 | - |

1) Die Bestimmung des Gehaltes an "freiem Formaldehyd" erfolgte nach der WKI-Methode (siehe E. Roffael, "Die Formaldehyd-Abgabe von Spanplatten und anderen Werkstoffen" (S. 45 ff.) DRW-Verlag, Stuttgart (1982), wobei die Abspaltung von Formaldehyd bei 40°C in einem Zeitraum von 24 Stunden erfaßt wurde.

2) ®Exolit 456, Hoechst Aktiengesellschaft, Frankfurt/Main

Es handelt sich um ein mit Melamin/Formaldehyd-Harz beschichtetes ®Exolit 422. Die Mikroverkapselung erfolgte gemäß DE-OS 33 16 880, Beispiel 1.

**Tabelle 8**

| Produkt | Gehalt an Melamin/Formaldehyd-Harz (%) | Art der Harz/Härter-Zugabe | Wasserlösliche Anteile (%) | | | |
|---|---|---|---|---|---|---|
| | | | bei 25°C | Veränderung (%) | bei 60°C | Veränderung (%) |
| Beispiel 13 | 7,4 | A[1] | 0,2 | -97 | 0,6 | -99 |
| Beispiel 14 | 11,8 | A[1] | 0,1 | -99 | 0,5 | -99 |
| Beispiel 15 | 9,5 | B[2] | 0,2 | -97 | 0,7 | -99 |
| Beispiel 16 | 9,4 | C[3] | 0,1 | -99 | 0,2 | -99 |
| Beispiel 17 | 9,6 | D[4] | < 0,1 | -99 | 0,1 | -99 |
| ® Exolit 422 [5] | - | - | 7,4 | - | 61 | - |

Zu 1) bis 5) siehe nachfolgende Seite
Zu Tabelle 8:
1) Die Zugabe der Harz- und Härtermenge erfolgte in einem Schritt.
2) Die Zugabe der Harz- und Härtermenge erfolgte in zwei Schritten. Die erste Hälfte wurde wie üblich eingesetzt. Die zweite Hälfte wurde nach einer Reaktionszeit von 1 Stunde bei 80°C zugesetzt.
3) Die Zugabe der Harz- und Härtermenge erfolgte in zwei Schritten. Die erste Hälfte wurde wie üblich eingesetzt. Die zweite Hälfte der Harzmenge wurde ohne Zugabe von Härter nach einer Reaktionszeit von 1 Stunde bei 80°C zugesetzt.
4) Die Zugabe der Harz- und Härtermenge erfolgte in drei Schritten. Das erste Drittel an Harz + Härter wurde wie üblich eingesetzt. Das zweite Drittel der Harzmengge wurde ohne Zusatz von Härter nach einer Reaktionszeit von 1 Stunde bei 80°C, das dritte Drittel der Harzmenge (wiederum ohne Härterzusatz) nach einer weiteren Reaktionszeit von 1 Stunde bei 80°C zugegeben.
5) Zum Vergleich wurden die Werte der für diese Versuche eingesetzten unbeschichteten Handelsware (® Exolit 422, Hoechst Aktiengesellschaft, Frankfurt/Main) aufgeführt.

Die Werte aus den Tabellen 1, 3, 5 und 8 lassen erkennen, daß mit Hilfe des erfindungsgemäßen Verfahrens der Gehalt an wasserlöslichen Anteilen im Ammoniumpolyphosphat erheblich gesenkt werden kann (bei 25°C um bis zu 99 %, bei 60°C ebenfalls um bis zu 99 %).

Darüber hinaus lassen die Angaben aus den Tabellen 2, 4 und 6 erkennen, daß durch das Verfahren der Mikroverkapselung die Säurezahl und der pH-Wert weitgehend unverändert bleiben und die Mittelwerte der Körnung nur unwesentlich (von ca. 12 μm auf ca. 16 μm) verschoben werden. Dagegen wird die Rieselfähigkeit sehr wesentlich (im Hinblick auf eine exakte Dosierbarkeit) verbessert.

Die Angaben in Tabelle 7 zeigen auf, daß der Gehalt an "freiem Formaldehyd" gegenüber dem Stand der Technik (DE-OS 33 16 880) um mehr als 90 % verringert werden konnte.

## Patentansprüche

1. Verfahren zur Herstellung von hydrolysestabilen, feinteiligen Flammschutzmitteln auf der Basis von freifließendem, pulverförmigem Ammoniumpolyphosphat der allgemeinen Formel

$$H_{(n-m)+2}(NH_4)_mP_nO_{3n+1}$$

in welcher n eine ganze Zahl mit einem Durchschnittswert von etwa 20 bis 800 bedeutet und das Verhältnis von m zu n etwa 1 beträgt, durch Behandlung des Ammoniumpolyphosphates in Gegenwart eines organischen Suspensionsmittels und unter Rühren mit einem wärmehärtbaren und in gehärtetem Zustand wasserunlöslichen Kunstharz, sowie Abtrennen und Trocknen des behandelten Ammoniumpolyphosphates, dadurch gekennzeichnet, daß man bei Raumtemperatur aus dem Ammoniumpolyphosphat, aus Wasser und dem organischen Suspensionsmittel, wobei in dem Wasser-Suspensionsmittel-Gemisch ein Wasseranteil von mindestens 40 Masse% vorliegt, sowie aus einem Melamin/Formaldehyd-Harz und gegebenenfalls einem Härter eine Suspension herstellt, dieses Gemisch unter Rühren auf 50 bis 180°C unter Normaldruck oder Überdruck erhitzt und zur Aushärtung der Harzkomponente die Suspension 15 bis 240 Minuten bei dieser Temperatur beläßt.

2. Verfahren nach Anspruch 1, dadurch gekennzeichnet, daß das Melamin/Formaldehyd-Harz im ungehärteten Zustand ein Pulver darstellt, dessen 50 masse%ige wäßrige Lösung eine dynamische Viskosität von 20 bis 50 mPa.s, einen pH-Wert (bei 20°C) von 8,8 bis 10,0 und eine Dichte (bei 20°C) von 1,21 bis 1,23 g/ml besitzt.

3. Verfahren nach Anspruch 1 oder 2, dadurch gekennzeichnet, daß als organische Suspensionsmittel aliphatische Alkohole mit 1 bis 4 C-Atomen oder Ketone mit 3 bis 6 C-Atomen eingesetzt werden.

4. Verfahren nach einem der voranstehenden Ansprüche, dadurch gekennzeichnet, daß zur Herstellung der Suspension ein Masseverhältnis von Wasser : organischem Suspensionsmittel wie 100 : 1 bis 150, insbesondere von 100 : 10 bis 100, eingehalten wird.

5. Verfahren nach einem der voranstehenden Ansprüche, dadurch gekennzeichnet, daß in der Suspension ein Masseverhältnis von Ammoniumpolyphosphat : Wasser-Suspensionsmittel-Gemisch : Harzkomponente : Härter von 1 : 0,5 bis 5 : 0,05 bis 0,5 : 0,0025 bis 0,1, insbesondere von 1 : 1 bis 3 : 0,05 bis 0,15 : 0,01, eingehalten wird.

6. Verfahren nach einem der voranstehenden Ansprüche, dadurch gekennzeichnet, daß die Reaktionszeit 0,5 bis 3 Stunden beträgt.

7. Verfahren nach einem der voranstehenden Ansprüche, dadurch gekennzeichnet, daß Ammoniumpolyphosphat mit einer mittleren Teilchengröße von 0,01 bis 0,05 mm eingesetzt wird.

8. Verfahren nach einem der voranstehenden Ansprüche, dadurch gekennzeichnet, daß das mikroverkapselte Ammoniumpolyphosphat als Flammschutzmittel eine mittlere Teilchengröße von 0,01 bis 0,1 mm, vorzugsweise von 0,03 bis 0,06 mm, hat.

9. Verfahren nach einem der voranstehenden Ansprüche, dadurch gekennzeichnet, daß der Anteil des Melamin/Formaldehyd-Harzes im Flammschutzmittel 2 bis etwa 15 Masse% beträgt.

10. Verfahren nach einem der voranstehenden Ansprüche, dadurch gekennzeichnet, daß die Beschichtung des Ammoniumpolyphosphates durch Behandlung mit dem Melamin/Formaldehyd-Harz und gegebenenfalls einem Härter in mehreren, beispielsweise zwei bis drei Schritten erfolgt.

11. Verfahren nach Anspruch 10, dadurch gekennzeichnet, daß das Reaktionsgemisch zwischen den einzelnen Schritten vor der Zugabe von weiterem Melamin/Formaldehyd-Harz und gegebenenfalls einem Härter abgekühlt wird.

## Claims

1. Process for making fine particulate flame-retardant agents, stable to hydrolysis, based on free-flowing, pulverulent ammonium polyphosphate of the general formula

$$H_{(n-m)+2}(NH_4)_m P_n O_{3n+1}$$

in which n stands for a whole number with an average value of about 20 to 800 and the ratio m/n is about 1, by treating tha ammonium polyphosphate in the presence of an organic dispersant and with agitation with a thermosetting artificial resin water-insoluble when cured, and by separating and drying the ammonium polyphosphate so treated, which comprises: preparing, at room temperature, a suspension from the ammonium polyphosphate, water and organic dispersant, the water/dispersant mixture containing at least 40 wgt. % water, and from a melamine/formaldehyde resin and optionally a hardener, heating the mixture, while stirring, to 50 to 180°C at atmospheric or under increased pressure and, for curing the resin component, allowing the suspension to remain at that temperature over a period of 15 to 240 minutes.

2. Process as claimed in claim 1, wherein the uncured melamine/formaldehyde-resin is a powder, the 50 wgt. % aqueous solution of which has a dynamic viscosity of 20 - 50 mPa.s, a pH-value (at 20°C) of 8.8 - 10.0 and a density (at 20°C) of 1.21 - 1.23 g/ml.

3. Process as claimad in claim 1 or 2, wherein the organic dispersant is an aliphatic alcohol having from 1 to 4 carbon atoms or a ketone having from 3 to 6 carbon atoms.

4. Process as claimed in any of the preceding claims, wherein the suspension is made using the water and organic dispersant in a quantitative ratio of 100 : 1 - 150, especially 100 : 10 - 100.

5. Process as claimed in any of the preceding claims, wherein the suspension contains the ammonium polyphosphate/water-dispersant-mixture/resin component/hardener in a quantitative ratio of 1 : 0.5 - 5 : 0.05 - 0.5 : 0.0025 - 0.1, especially 1 : 1 - 3 : 0.05 - 0.15 : 0.01.

6. Process as claimed in any of the preceding claims, wherein the reaction period is 0.5 - 3 hours.

7. Process as claimed in any of the preceding claims, wherein ammonium polyphosphate having a mean particle size of 0.01 - 0.05 mm is used.

8. Process as claimed in any of the preceding claims, wherein the microencapsulated ammonium polyphosphate as a flame-retardant agent has a mean particle size of 0.01 - 0.1 mm, preferably 0.03 - 0.06 mm.

9. Process as claimed in any of the preceding claims, wherein the proportion of the melamine/formaldehyde-resin in the flame-retardant agent is 2 to about 15 wgt. %.

10. Process as claimed in any of the preceding claims, wherein the ammonium polyphosphate is encapsulated by treating it with the melamine/formaldehyde-resin and the hardener, if desired, in a plurality of steps, e.g. in two to three steps.

11. Process as claimed in claim 10, wherein the reaction mixture is cooled between the individual treatment steps prior to adding additional quantities of melamine/formaldehyde-resin and hardener, if desired.

## Revendications

1. Procédé de préparation d'agents ignifugeants pulvérulents, stables à l'hydrolyse, à base de polyphosphate d'ammonium pulvérulent fluide de formule générale

$$H_{(n-m)+2}(NH_4)_m P_n O_{3n+1}$$

dans laquelle n est un nombre entier d'une valeur moyenne d'environ 20 à 800 et m/n est d'environ 1, par traitement du polyphosphate d'ammonium en présence d'un dispersant organique et en agitant avec une résine artificielle thermodurcissable et insoluble dans l'eau à l'état durci, et séparation et séchage du polyphosphate d'ammonium traité, caractérisé en ce que l'on prépare à la température ambiante une suspension à partir du polyphosphate, de l'eau et du dispersant organique, le mélange eau/agent dispersant contenant une proportion d'eau d'au moins 40 % en poids, et d'une résine mélamine/formaldéhyde et éventuellement d'un durcissant, on chauffe ce mélange en agitant à 50-180°C à la pression normale ou sous pression élevée et on le laisse à cette température pendant 15 à 240 min jusqu'à durcissement de la résine.

2. Procédé selon la revendication 1, caractérisé en ce que la résine mélamine/formaldéhyde est à l'état non durci une poudre dont une solution aqueuse à 50 % en poids a une viscosité dynamique de 20-50 mPa.s, un pH (à 20°C) de 8,8-10,0 et une densité (à 20°C) de 1,21-1,23 g/ml.

3. Procédé selon la revendication 1 ou 2, caractérisé en ce que l'on utilise comme dispersants organiques des alcools aliphatiques en $C_1$-$C_4$ ou des cétones en $C_3$-$C_6$.

4. Procédé selon l'une quelconque des revendications précédentes, caractérisé en ce que l'on maintient pour la préparation de la suspension un rapport pondéral eau/dispersant organique de 100:1-150, en particulier